Europäisches Patentamt

European Patent Office

Office européen des brevets

(11) Veröffentlichungsnummer : **0 373 354 B1**

(12) **EUROPÄISCHE PATENTSCHRIFT**

(45) Veröffentlichungstag der Patentschrift :
29.07.92 Patentblatt 92/31

(51) Int. Cl.⁵ : **C04B 35/10**, C04B 35/66,
// B22D41/00

(21) Anmeldenummer : 89120587.4

(22) Anmeldetag : 07.11.89

(54) **Verfahren zur Herstellung von feuerfesten keramischen Formkörpern.**

(30) Priorität : 16.12.88 DE 3842403

(43) Veröffentlichungstag der Anmeldung :
20.06.90 Patentblatt 90/25

(45) Bekanntmachung des Hinweises auf die
Patenterteilung :
29.07.92 Patentblatt 92/31

(84) Benannte Vertragsstaaten :
AT BE DE ES FR GB GR IT LU NL SE

(56) Entgegenhaltungen :
EP-A- 0 193 751
FR-A- 2 399 391

(73) Patentinhaber : RADEX-HERAKLITH
INDUSTRIEBETEILIGUNGS
AKTIENGESELLSCHAFT
Opernring 1
A-1010 Wien (AT)

(72) Erfinder : Schatz, Uwe, Dipl.-Ing.
Im Hofacker 38
W-5401 Urmitz (DE)
Erfinder : Dötsch, Lorenz
Im Dreispitz 12
W-5414 Vallendar (DE)
Erfinder : Batton, Andreas, Dr.
c/o Radex Austria AG., Abt. F5
A-9545 Radenthein (AT)
Erfinder : Decker, Jens
Hauptstr. 367
W-5330 Königswinter (DE)
Erfinder : Rave, Ortwin, Dipl.-Min.
Moselstrasse 15
W-5401 Niederfell (DE)
Erfinder : Schüller, Helmut, Dipl.-Ing.
Am Berghang 7
W-5330 Königswinter 1 (DE)

(74) Vertreter : Becker, Thomas, Dr. et al
Becker & Müller Patentanwälte
Eisenhüttenstrasse 2
W-4030 Ratingen 1 (DE)

EP 0 373 354 B1

## Beschreibung

Die Erfindung betrifft ein Verfahren zur Herstellung von feuerfesten keramischen Formkörpern, insbesondere solchen auf Basis hochtonerdehaltiger Werkstoffe.

Formteile der vorstehend genannten Art finden insbesondere im Bereich der Sekundärmetallurgie große Verwendung. Beispielhaft seien Schieberplatten für Schieberverschlüsse genannt. Sowohl der Stand der Technik wie auch der Gegenstand der Erfindung werden nachstehend in bezug auf den Anwendungsbereich Schieberplatte näher erläutert, ohne daß hierin eine Beschränkung des Anwendungsbereiches liegt, der ebenso die einzelnen Teile eines Ausgusses, Tauchrohre oder dergleichen umfaßt.

Wie sich aus "Interceram, Special Issue 1987, Proceedings'86, 10" ergibt, finden keramisch gebundene, hochtonerdehaltige Schieberplatten zur Zeit die größte Anwendung. Das Feuerfestmaterial besteht im wesentlichen aus einer Mischung aus Sinterkorund- und Sintermullitkörnern in einer Mullit-Matrix. Die Brenntemperatur solcher Platten liegt oberhalb 1.450° C und hängt wesentlich von der Mullit-Komponente ab. Mullit wird dabei insbesondere in gemahlener Form eingebracht.

Nach dem Brennen werden die Platten üblicherweise einoder zweimal teergetränkt und anschließend bei Temperaturen zwischen 300 und 650° C getempet. Durch Veränderung der Temperatur kann das Verhältnis von verdampfbaren zu nicht verdampfbaren Kohlenstoff-Bestandteilen in der Platte kontrolliert werden. Eine Teerimprägnierung und Temperung hat einen wesentlichen Einfluß auf die Haltbarkeit der Schieberplatte.

Die Vorteile einer solchen Schieberplatte bestehen in einer guten Temperaturwechselbeständigkeit und guten Heißeigenschaften gegenüber Metallschmelzen. Die Nachteile bestehen in einer relativ schlechten Korrosionsbeständigkeit, insbesondere gegenüber Mn-haltigen Metallschmelzen, bedingt durch einen zum Teil erheblichen Mullit-Phasen-Anteil von 10 Gew.-% und mehr.

Darüber hinaus sind Schieberplatten auf Basis Zirkondioxid bekannt, zum Teil durch MgO teilstabilisert. Diese Platten weisen eine extrem hohe Erosionsbeständigkeit gegenüber einer Metallschmelze auf. Der Nachteil sowohl reiner als auch teilstabilisierter Zirkonoxidplatten besteht in einem spezifischen Wärmedehnungs-Verhalten. Bis 1100° C erfolgt eine Expansion, an die sich eine Kontraktion anschließt, und zwar aufgrund einer Modifikationsänderung des Gefüges Monoklin-Tetragonal. Bei Temperaturen über 1300° C erfolgt eine weitere Expansion. Insoweit neigen Formteile auf Zirkonoxid-Basis durch Phasenumwandlungen zum Reißen, insbesondere bei Formteilen, die nicht mechanisch "eingespannt" sind. Darüber hinaus ist ihre Herstellung teuer.

Die EP 0 193 751 A2 offenbart die Verwendung von zementfreien Vibriermassen auf Basis von Aluminiumoxid, gegebenenfalls unter Mitverwendung von Chromoxid, Siliziumkarbid und/oder Kohlenstoffträgern, sowie mit einem Gehalt von 2 bis 8 Gew.-%, bezogen auf die übrigen Festbestandteile, an amorpher, feinteiliger oder kolloidaler Kieselsäure als Bindemittel, welche nach dem Formen und Trocknen bei Temperaturen von 300 bis 1000° C getempert beziehungsweise gebrannt worden sind, zur Herstellung von Verschleißteilen in Schieberverschlüssen.

Der vorliegenden Erfindung liegt die Aufgabe zugrunde, eine Möglichkeit zur Herstellung von feuerfesten keramischen Formkörpern, insbesondere auf Basis hochtonerdehaltiger Werkstoffe aufzuzeigen, mit der die beschriebenen Nachteile vermieden werden. Insbesondere geht es um die Herstellung von Formteilen, die sowohl bezüglich der Korrosionsbeständigkeit gegenüber Metallschmelze als auch bezüglich ihrer Temperaturwechselbeständigkeit bekannten Formteilen überlegen sind, ohne auf die positiven Eigenschaften einer hohen Temperaturbeständigkeit verzichten zu müssen.

Der Erfindung liegt die Erkenntnis zugrunde, daß die Nachteile bekannter, hochtonerdehaltiger feuerfester Formteile insbesondere durch einen zu hohen Mullit-Anteil bedingt sind. Ein gewisser Mullit-Anteil wird bisher im Stand der Technik als unverzichtbar angesehen, insbesondere um die günstige Temperaturwechselbeständigkeit sicherzustellen.

In Abkehr von den im Stand der Technik vorgeschlagenen Maßnahmen schlägt die Erfindung vor, ausgehend von einem relativ feinkörnigen feuerfesten Matrix-Material auf Basis hochtonerdehaltiger Werkstoffe durch Zugabe eines Kieselsäure-Gels eine in-situ-Bildung von Mullit beim Brand des so aufbereiteten Werkstoff-Gemisches hervorzurufen, das aufgrund der Konfektionierung in Gelform in sehr viel geringerer Menge und trotzdem sehr viel gleichmäßiger in das feuerfeste Matrixmaterial eingebracht werden kann. Dessen Menge richtet sich nach dem einzubringenden $SiO_2$-Anteil.

Die Verwendung des Kieselsäuregels in flüssiger oder viskoser Phase ermöglicht es, die einzelnen Feststoffteilchen des feuerfesten Matrix-Materials mit einer dünnen Kieselsäurebeschichtung zu versehen. Diese Beschichtung dient als Bindemittel zwischen den Teilchen des feuerfesten Matrix-Materials und bewirkt beim anschließenden Brand oder in der Anwendung durch Reaktion mit dem Aluminiumoxid eine Mullit-Bildung, jedoch ausschließlich im Grenzphasenbereich der einzelnen Aluminiumoxid-Teilchen.

Dabei ist von entscheidender Bedeutung, daß der Kieselsäureanteil aufgrund der Einbringung als Kieselsäuregel wesentlich geringer ist als bei konventionellen Formteilen der genannten Art. Das Kieselsäuregel wird

2

bei der Aufbereitung der Werkstoff-Mischung auf die Teilchen des feuerfesten Matrix-Materials aufgesprüht, wobei bereits geringe Mengen ausreichen, eine dünne Oberflächenbeschichtung auszubilden, die aber ausreicht, zwischen den Aluminiumoxid-Teilchen beim anschließenden Verpressen einen ausreichenden Verbund und damit eine ausreichende Grünstandsfestigkeit zu erreichen. Als wichtiges Merkmal ist hervorzuheben, daß - offensichtlich bedingt durch hohe Grenzflächenaktivitäten zwischen den feinen, mit Kieselsäure beschichteten Aluminiumoxidteilchen - eine fast hundertprozentige Mullit-Phasenbildung erreicht wird, bezogen auf die Gesamtmasse jedoch in erheblich geringerer und feinverteilter Menge als beim Stand der Technik.

Versuche haben gezeigt, daß ein $SiO_2$-Anteil von etwa 0,5 bis 4 Gew.-%, bezogen auf die Gesamtmischung, ausreicht, um eine gute Bindung der Matrix-Teilchen zu erreichen. Bei einem 40 %-igen Kieselsäuregel ergibt sich dann eine Zugabemenge des Gels zwischen etwa 1 und 9 Gew.-%.

In diesem Zusammenhang spielt - wie oben ausgeführt - auch die Auswahl der Kornfraktionen des feuerfesten Matrix-Materials eine wichtige Rolle.

Erfindungsgemäß wird zunächst davon ausgegangen, feuerfestes Matrix-Material mit einer maximalen Korngröße von 3 mm, vorzugsweise maximal 1,2 mm einzusetzen. Je feiner das Material ist, um so höher sind die beschriebenen Grenzflächenaktivitäten. Vorteilhaft ist es, das feuerfeste Matrix-Material in mindestens zwei Kornfraktionen zu unterteilen, und zwar eine erste gröbere Kornfraktion zum Beispiel mit einer Korngröße zwischen 0,3 und 1,2 mm, die im Formteil später die Funktion eines "Stützkorns" übernimmt, sowie einer feineren Kornfraktion, zum Beispiel kleiner 0,3 mm, die Zwickel zwischen den gröberen Teilchen ausfüllt und zusammen mit der Oberflächenbeschichtung des Gels die Herstellung gepreßter feuerfester Formteile mit bereits hoher Grünstandsfestigkeit ermöglicht. Insoweit schlägt die Erfindung in ihrer allgemeinsten Ausführungsform ein Verfahren zur Herstellung feuerfester Formkörper mit folgenden Schritten vor

- Herstellen einer Mischung auf der Basis eines
- keramischen Materials mit einem $Al_2O_3$-Gehalt > 90 Gew.-% der Kornfraktion kleiner 3,0 mm,
- 0,5 bis 4 Gew.-% $SiO_2$, eingebracht als Kieselsäuregel
- wobei das Kieselsäuregel auf das feuerfeste Matrix-material aufgesprüht wird
- Verpressen der Mischung zu Formteilen,
- gegebenenfalls mit vorheriger und/oder anschließender Trocknung und
- anschließendes Tempern der Formkörper oder Brennen bei Temperaturen oberhalb 1.500° C.

Das feuerfeste Matrix-Material kann dabei - wie oben ausgeführt - auch in unterschiedlichen Kornfraktionen eingesetzt werden, zum Beispiel mit folgendem Versatz:

- 29 bis 95 Gew.-% der Kornfraktion 0,3 bis 1,2 mm
- 5 bis 71 Gew.-% der Kornfraktion kleiner 0,3 mm.

Besonders hohe Dichten werden erzielt unter Verwendung einer feuerfesten Matrixkomponente mit einer maximalen Korngröße von 0,3 mm und insbesondere, wenn diese noch einen Anteil in mikronisierter Form aufweist. Der Einsatz eines solchen Materials führt zu Produkten mit einem Raumgewicht, das nahe an das theoretische Raumgewicht von Aluminiumoxid reicht, lediglich vermindert aufgrund des (sehr geringen, aber im Sinne einer guten Temperaturwechselbeständigkeit wichtigen) Mullit-Anteils.

Versuche haben gezeigt, daß sich unter Einsatz von 3 Gew.-% $SiO_2$, eingebracht über das Kieselsäuregel, Schieberplatten hervorragender Erosionsbeständigkeit, sehr guter Temperaturwechselbeständigkeit und hoher Feuerfestigkeit herstellen lassen, bei denen röntgenographisch Mullit nicht nachweisbar war. Die Phänomene insbesondere im Bereich der Grenzflächenreaktionen zwischen den einzelnen Teilchen sind noch nicht vollständig geklärt. Möglicherweise kommt es aber zur Ausbildung röntgenamorpher Mullit-Phasen im Grenzflächenbereich der Aluminiumoxid-Teilchen oder aber zur Bildung von Mullit unterschiedlicher kristallographischer Struktur. In jedem Fall führt das erfindungsgemäße Verfahren zu feuerfesten Formteilen, die unter Aufrechterhaltung der positiven Eigenschaften der eingangs genannten bekannten Formteile auf Basis hochtonerdehaltiger Werkstoffe nun auch eine sehr gute Korrosionsbeständigkeit bei vermindertem Mullitgehalt zeigen.

Die Werkstoffeigenschaften werden zusätzlich verbessert, wenn das feuerfeste Matrix-Material einen bestimmten Anteil an mikronisiertem Aluminiumoxid enthält, worunter Aluminiumoxid-Teilchen einer Korngröße unter 0,1 mm, vorzugsweise unter 0,01 mm verstanden werden. Dieser Anteil, der offensichtlich ebenfalls eine Art Binderfunktion im Zusammenhang mit einer Oberflächenbeschichtung aus Kieselsäuregel übernimmt, sollte bei etwa 3 bis 35 Gew.-% liegen, wobei 5 bis 20 Gew.-% bevorzugt sind.

Die feine Kornfraktion und hier insbesondere die Teilchen mit einer Korngröße < 0,1, vorzugsweise < 0,01 mm sind wesentlich verantwortlich für eine erhöhte Grenzflächenaktivität der Teilchen beim Brand und damit ein verbessertes Sinterungsverhalten.

Die gröbere Kornfraktion erfüllt dagegen im wesentlichen die genannte Stützfunktion, und durch entsprechende Kornabstufung läßt sich die Porosität des gebrannten Formteils vorbestimmbar einstellen. Die Porosität spielt insbesondere in bezug auf eine anschließende Teertränkung eine wesentliche Rolle.

Das Kieselsäuregel besteht vorzugsweise aus nahezu reinem $SiO_2$ in einer Lösung, zum Beispiel einer Alkohollösung, wobei der Alkohol später verdampft. Das Gel wird allgemein als 30 - 50 %-ige Lösung eingebracht.

Für das Aufsprühen des Kieselsäuregels auf die Tonerde-Teilchen bietet sich eine Oberflächenbeschichtung des feuerfesten Matrix-Materials in einer Wirbelschicht an. Um eine Agglomeration der Teilchen zu verhindern und eine Beschichtung jedes einzelnen Kornes mit dem Gel zu erreichen, hat es sich als vorteilhaft erwiesen, die Wirbelkammer mit Unterdruck zu fahren und die Teilchen quasi anzusaugen, wobei durch eine diskontinuierliche Fahrweise periodisch das beschichtete Material entnommen wird.

Soweit dies notwendig erscheint, insbesondere bei Verwendung nur geringer Mengen des Kieselsäuregels, kann der Mischung zusätzlich ein Binder beigemischt werden, zum Beispiel ein Binder auf Basis Polyvinylalkohol, Methylcellulose oder ein Phosphatbinder. Gegebenenfalls kann dann auf einen Brand verzichtet werden. In diesem Fall werden die hergestellten Formteile nur getempert, etwa bei 500 bis 700° C. Ebenso ist auch die Zugabe von Kohlenstoff denkbar.

Das feinkörnige bzw. kornabgestufte Ausgangsgemisch ist im übrigen auch verantwortlich dafür, daß die so hergestellten Teile nach dem Brand eine außerordentlich glatte Oberfläche aufweisen, die fast glasiert wirkt. Hierdurch wird in nennenswertem Maße die Erosionsbeständigkeit und Reibfestigkeit erhöht, was insbesondere für den Anwendungsbereich Schieberplatten von großer Bedeutung ist. Bei einem Schieberplattenverschluß werden insbesondere im Bereich der aufeinander gleitenden Plattenoberflächen häufig Abrieberscheinungen beobachtet, die einen vorzeitigen Austausch der Schieberplatten notwendig machen und im Extremfall sogar zu einem Metallschmelze-Durchbruch führen können.

Als feuerfestes Matrix-Material bieten sich in erster Linie die verschiedenen Tonerde- und Korundqualitäten an. Sofern von hochtonerdehaltigen Materialien gesprochen wird, werden hierunter solche mit einem $Al_2O_3$-Gehalt über 90 Gew.-% verstanden. Für die gröbere Kornfraktion wird eine Tabulartonerde und/oder Korund bevorzugt, während für die feinere Kornfraktion neben Tabulartonerde und Korund auch calcinierte Tonerde, gegebenenfalls in mikronisierter Form, besonders vorteilhaft ist.

Das tonerdehaltige Matrix-Material kann teilweise durch andere hochfeuerfeste Oxide ersetzt werden, zum Beispiel $ZrO_2$, $TiO_2$ und/oder $Cr_2O_3$, jedoch sollte deren Anteil nicht über 20 Gew.-% insgesamt betragen.

Überraschenderweise hat sich gezeigt, daß nach dem erfindungsgemäßen Verfahren hergestellte Formteile sich auch im Schnellbrand brennen lassen, was nach dem Stand der Technik nicht möglich war. Unter "Schnellbrand" werden Pyroprozesse verstanden, die eine gesamte Brenndauer unter 24 Stunden aufweisen, wobei in Einzelfällen, insbesondere bei relativ kleinen Formteilen, sich Brennzeiten von 2 Stunden bei etwa 1.600° C als ausreichend erwiesen haben. Kleine Teile sollen dabei definitionsgemäß eine maximale Höhe/Breite oder Länge von 20 cm aufweisen.

Folgende Verfahrensvarianten werden in bevorzugten Ausführungsformen angeboten:
– Einstellen der Mischung vor dem Verpressen auf eine Restfeuchte von 0,5 bis 1,0 Gew.-%.
– Zugabe des Binders in einer Menge bis zu 7 Gew.-%, bezogen auf die Gesamtmischung.
– Dabei kann der Binder auf das feuerfeste Matrix-Material ebenfalls aufgesprüht werden.
– Die Beschichtung des feuerfesten Matrix-Materials mit dem Gel und/oder dem Binder kann in einem Wirbelbett erfolgen, in dem vorzugsweise ein Unterdruck eingestellt wird.
– Ebenso ist die Zugabe einer kohlenstoffhaltigen Komponente zu der Mischung aus aluminiumoxidreichem Material und Gel möglich.
– Dabei kann die kohlenstoffhaltige Komponente in einer Menge von 5 bis 15 Gew.-%, bezogen auf je 100 Gewichtsteile der Mischung aus dem keramischen Material und dem Kieselsäuregel zugesetzt werden.
– Als kohlenstoffhaltige Komponente kann ein Harz zugegeben werden.

Weitere Merkmale der Erfindung ergeben sich aus den Merkmalen der übrigen Patentansprüche sowie den sonstigen Anmeldungsunterlagen.

Nachstehend werden beispielhaft zwei Versätze zur Herstellung einer Schieberplatte für einen Schieberverschluß angegeben:

A.
– Tabulartonerde der Kornfraktion 0,3 bis 1,2 mm: 55 Gew.-%
– calcinierte Tonerde der Kornfraktion < 0,3 mm: 45 Gew.-%
– Kieselsäuregel mit 3 Gew.-% $SiO_2$, bezogen auf die feuerfeste keramische Komponente.

B.
– Tabulartonerde der Kornfraktion kleiner 0,3 mm, davon 25 Gew.-% kleiner 0,01 mm
– Kieselsäuregel mit 3 Gew.-% $SiO_2$, bezogen auf die feuerfeste keramische Komponente.

Im Rahmen der Erfindung liegt es auch, calcinierte Tonerde in einer Kornfraktion > 0,3 mm einzusetzen.

Eine entsprechend den vorstehenden Versätzen hergestellte Schieberplatte weist ein mittleres Raumgewicht von über 3,1 g/cm³ und eine Kaltdruckfestigkeit von über 100 N/mm² auf. Diese Werte wurden erzielt bei einer Brenntemperatur von 1.600° C.

Die Platte zeigt eine hervorragende Temperaturwechselbeständigkeit, allen bekannten Schieberplatten auf Basis $Al_2O_3$ deutlich überlegene Korrosionsbeständigkeit und sehr gute Heißeigenschaften.

Das erfindungsgemäße Verfahren erweist sich damit als einfach durchzuführen und insbesondere durch die Möglichkeiten des Schnellbrandes auch wirtschaftlicher gegenüber bekannten Verfahren und führt überdies zu feuerfesten Formteilen mit verbesserten Eigenschaften gegenüber bekannten Teilen.

**Patentansprüche**

1. Verfahren zur Herstellung von feuerfesten keramischen Formkörpern mit folgenden Schritten:
1.1 Herstellen einer Mischung auf der Basis eines
1.1.1 keramischen Materials mit einem $Al_2O_3$-Gehalt größer 90 Gew.-% der Kornfraktion kleiner 3 mm und
1.1.2 0,5 bis 4 Gew.-% $SiO_2$, eingebracht als Kieselsäureund/oder Mullitgel,
1.2 Verpressen der Mischung zu Formteilen,
1.3 gegebenenfalls mit vorheriger und/oder anschließender Trocknung und
1.4 anschließendes Tempern der Formkörper oder Brennen bei Temperaturen oberhalb 1.500° C.

2. Verfahren nach Anspruch 1, bei dem ein Material gemäß Merkmal 1.1.1 von Anspruch 1 in einer Kornfraktion kleiner 1,2 mm eingesetzt wird.

3. Verfahren nach Anspruch 1 oder 2, bei dem ein Material gemäß Merkmal 1.1.1 von Anspruch 1 mit
3.1.1 29 bis 95 Gew.-% der Kornfraktion 0,3 bis 1,2 mm und
3.1.2 5 bis 71 Gew.-% der Kornfraktion kleiner 0,3 mm
eingesetzt wird

4. Verfahren nach Anspruch 1 oder 2, bei dem ein Material gemäß Merkmal 1.1.1 von Anspruch 1 mit
4.1.1 30 bis 90 Gew.-% eines Materials der Kornfraktion 0,3 bis 1,2 mm,
4.1.2 5 bis 35 Gew.-% eines Materials der Kornfraktion 0,1 bis 0,3 mm,
4.1.3 3 bis 35 Gew.-% eines Materials der Kornfraktion < 0,1 mm.
eingesetzt wird

5. Verfahren nach Anspruch 1, bei dem ein Material gemäß Merkmal 1.1.1 von Anspruch 1 mit einer Korngröße kleiner 0,3 mm eingesetzt wird.

6. Verfahren nach einem der Ansprüche 1 bis 5 unter Verwendung eines keramischen Materials, bei dem 5 bis 20 Gew.-% in einer Korngröße < 0,01 mm vorliegen.

7. Verfahren nach einem der Ansprüche 1 bis 6, bei dem die Mischung vor dem Verpressen auf eine Restfeuchte von 0,5 bis 1,0 Gew.-% eingestellt wird.

8. Verfahren nach einem der Ansprüche 1 bis 7, wobei als aluminiumoxidreiches Material Tabulartonerde, calcinierte Tonerde und/oder Korund eingesetzt wird.

9. Verfahren nach einem der Ansprüche 1 bis 8, wobei der Mischung aus aluminiumoxidreichem Material und Kieselsäuregel ein chemischer Binder zugesetzt.wird.

10. Verfahren nach Anspruch 9, wobei der Binder in einer Menge bis zu 7 Gew.-% , bezogen auf die Gesamtmischung, zugesetzt wird.

11. Verfahren nach Anspruch 9 oder 10, wobei als Binder Polyvinylalkohol, Methylcellulose oder eine organisch modifizierte Phosphorsäure eingesetzt wird.

12. Verfahren nach einem der Ansprüche 1 bis 11, wobei der Binder auf das feuerfeste Matrix-Material aufgesprüht wird.

13. Verfahren nach einem der Ansprüche 1 bis 12, wobei das feuerfeste Matrix-Material in einem Wirbelbett mit dem Gel und/oder dem Binder beschichtet wird.

14. Verfahren nach Anspruch 13, bei dem die Verwirbelung über einen in der Wirbelkammer eingestellten Unterdruck erfolgt.

15. Verfahren nach einem der Ansprüche 1 bis 14, wobei der Mischung aus aluminiumoxidreichem Material und Gel eine kohlenstoffhaltige Komponente zugesetzt wird.

16. Verfahren nach Anspruch 15, wobei die kohlenstoffhaltige Komponente in einer Menge von 5 bis 15 Gew.-%, bezogen auf je 100 Gew.-% der Mischung gemäß Merkmal 1.1 von Anspruch 1 zugesetzt wird.

17. Verfahren nach Anspruch 15 oder 16, wobei die kohlenstoffhaltige Komponente in Form eines Harzes zugegeben wird.

18. Verfahren nach einem der Ansprüche 1 bis 17, bei dem das aluminiumoxidreiche Ausgangsmaterial bis zu 20 Gew.-% durch $ZrO_2$, $TiO_2$ und/oder $Cr_2O_3$ ersetzt wird.

19. Verfahren nach einem der Ansprüche 1 bis 18, bei dem der Formkörper anschließend teergetränkt wird.

## Claims

1. Procedure for manufacturing of fireproof ceramic molded parts with the following steps:

1.1        Preparing a mixture on the basis of a

1.1.1        ceramic material with an $Al_2O_3$ content greater than 90 % by weight in a granular fraction less than 3 mm, and

1.1.2        0.5 - 4 % by weight $SiO_2$, introduced as silica gel,

1.1.3        spraying said silica gel onto said refractory matrix material,

1.2        pressing of the mixture to molded parts,

1.3        if required, with preceding and/or subsequent drying, and

1.4        subsequent annealing of the molded parts or firing at temperatures above 1,500°C.

2. Procedure according to Claim 1, whereby a material according to characteristic 1.1.1 of Claim 1 is used with a granular fraction of less than 1.2 mm.

3. Procedure according to Claim 1 or 2, wherein a material according to characteristic 1.1.1 of Claim 1 with

3.1.1        29 - 95 % by weight of the granular fraction 0.3 - 1.2 mm and

3.1.2        5 - 71 % by weight of the granular fraction less than 0.3 mm is used.

4. Procedure according to Claim 1 or 2, wherein a material according to characteristic 1.1.1 of Claim 1 is used with

4.1.1        30 - 90 % by weight of a material with a granular fraction of 0.3 - 1.2 mm,

4.1.2        5 - 35 % by weight of a material with a granular fraction of 0.1 - 0.3 mm,

4.1.3        3 - 35 % by weight of a material with a granular fraction of < 0.1 mm.

5. Procedure according to Claim 1, wherein a material according to characteristic 1.1.1 of Claim 1 with a granular size of less than 0.3 mm is used.

6. Procedure according to one of Claims 1 to 5, wherein a ceramic material with 5 - 20 % by weight in the granular size range of < 0.01 mm is used.

7. Procedure according to one of Claims 1 to 6, wherein, prior to pressing, the mixture is set for a residual moisture of 0.5 - 1.0 % by weight.

8. Procedure according to one of Claims 1 to 7, wherein tabular alumina, calcinated alumina and/or corundum is used as material rich in aluminum oxide.

9. Procedure according to one of Claims 1 to 8, wherein a chemical binder is added to the mixture of aluminum oxide rich material and silica gel.

10. Procedure according to Claim 9, wherein the binder is added in a quantity of up to 7 % by weight, related to the total mixture.

11. Procedure according to Claim 9 or 10, wherein polyvinyl alcohol, methyl cellulose, or an organically modified phosphoric acid is used as a binder.

12. Procedure according to one of claims 1 to 11, wherein the binder is sprayed onto the refractory matrix material.

13. Procedure according to one of Claims 1 to 12, wherein the fireproof matrix material is coated with the gel and/or the binder on a fluid bed.

14. Procedure according to Claim 13, wherein the fluidization is achieved by means of a negative pressure set for the fluid chamber.

15. Procedure according to one of Claims 1 to 14, wherein a component containing carbon is added to the mixture of aluminum oxide rich material and gel.

16. Procedure according to Claim 15, wherein the carbon containig component is added in a quantity of 5 - 15 % by weight, in relation to 100 % of the mixture according to characteristic 1.1 of Claim 1.

17. Procedure according to Claim 15 or 16, wherein the carbon containing component is added in the form of a resin.

18. Procedure according to one of Claims 1 to 17, wherein the initial material rich in aluminum oxide is partially replaced with $ZrO_2$, $TiO_2$ and /or $Cr_2O_3$.

19. Procedure according to one of claims 1 to 18, wherein the molded part is finally tar infiltrated.

## Revendications

1. Procédé de fabrication de corps moulés, en céramiques réfractaires comportant les étapes suivantes :

1.1        Fabrication d'un mélange sur la base d'un

1.1.1.        matériau céramique d'une teneur en $Al_2O_3$ supérieure à 90% en poids de la fraction granulométrique inférieure à 3 mm et

1.1.2.      0,5 à 4% en poids de SiO$_2$, introduit sous la forme de gel de silice, dans lequel

1.1.3.      le gel de silice est vaporisé sur la matière réfractaire de la matrice,

1.2          moulage par pression du mélange pour obtenir des corps moulés,

1.3          éventuellement avec séchage préalable et/ou ultérieur et

1.4          recuit ultérieur des corps moulés ou cuisson à des températures supérieures à 1500 °C.

2. Procédé selon la revendication 1, selon lequel un matériau selon la caractéristique 1.1.1 de la revendication 1 est introduit dans une fraction granulométrique inférieure à 1,2 mm.

3. Procédé selon la revendication 1, selon lequel on utilise un matériau selon la caractéristique 1.1.1 de la revendication 1 contenant

3.1.1      de 29 à 95% en poids de la fraction granulométrique comprise entre 0,3 et 1,2 mm et

3.1.2      de 5 à 71% en poids de la fraction granulométrique inférieure à 0,3 mm.

4. Procédé selon la revendication 1 ou 2, selon lequel on utilise un matériau selon la caractéristique 1.1.1 de la revendication 1 contenant

4.1.1      de 30 à 90% en poids d'un matériau de fraction granulométrique comprise entre 0,3 et 1,2 mm,

4.1.2      de 5 à 35% en poids d'un matériau de la fraction granulométrique comprise entre 0,1 et 0,3 mm,

4.1.3      de 3 à 35% en poids d'un matériau de la fraction granulométrique < 0,1 mm.

5. Procédé selon la revendication 1, selon lequel on utilise un matériau selon la caractéristique 1.1.1 de la revendication 1 d'une granulométrie inférieure à 0,3 mm.

6. Procédé selon l'une des revendications 1 à 5, avec utilisation d'un matériau céramique, selon lequel 5 à 20% en poids ont une granulométrie < 0,01 mm.

7. Procédé selon l'une des revendications 1 à 6, selon lequel , avant le moulage sous pression, l'humidité résiduelle du mélange est réglée entre 0,5 et 1% en poids.

8. Procédé selon l'une des revendications 1 à 7, selon lequel on utilise comme matériau riche en oxyde d'aluminium, de l'argile tabulaire, de l'argile calcinée et/ou du corindon.

9. Procédé selon l'une des revendications 1 à 8 selon lequel on ajoute un liant chimique au mélange constitué de matière riche en oxyde d'aluminium et de gel de silice.

10. Procédé selon la revendication 9, selon lequel le liant est ajouté à raison de 7% en poids par rapport au mélange total.

11. Procédé selon la revendication 9 ou 10, selon lequel on utilise comme liant de l'alcool de polyvinyle, de la méthylcellulose ou un acide phosphorique modifié organiquement.

12. Procédé selon l'une des revendications 1 à 11, selon lequel le liant est vaporisé sur la matière réfractaire de la matrice.

13. Procédé selon l'une des revendications 1 à 12, selon lequel la matière réfractaire de la matrice est recouverte avec le gel et/ou le liant dans un lit fluidisé.

14. Procédé selon la revendication 13, selon lequel la fluidisation s'obtient par une dépression dans la chambre de fluidisation.

15. Procédé selon l'une des revendications 1 à 14, selon lequel on ajoute un composant carboné au mélange constitué de matériau riche en oxyde d'aluminium et de gel.

16. Procédé selon la revendication 15, selon lequel le composant carboné est ajouté à raison de 5 à 15% en poids pour 100% en poids du mélange selon la caractéristique 1.1 de la revendication 1.

17. Procédé selon la revendication 15 ou 16, selon lequel le composant carboné est ajouté sous la forme d'une résine

18. Procédé selon l'une des revendications 1 à 17, selon lequel le matériau initial riche en oxyde d'aluminium est remplacé jusqu'à 20% en poids par ZrO$_2$, TiO$_2$ et/ou Cr$_2$O$_3$.

19. Procédé selon l'une des revendications 1 à 18, selon lequel le corps moulé est ensuite imprégné de goudron.